Europäisches Patentamt

European Patent Office

Office européen des brevets

(11) Numéro de publication : **0 401 126 B1**

(12) **FASCICULE DE BREVET EUROPEEN**

(45) Date de publication du fascicule du brevet :
**21.12.94 Bulletin 94/51**

(51) Int. Cl.[5] : **H04B 10/14, H04Q 11/00**

(21) Numéro de dépôt : **90401485.9**

(22) Date de dépôt : **01.06.90**

(54) **Procédé de transmission optique de signaux par self-hétérodynage et système de transmission avec matrice de commutation mettant en oeuvre un tel procédé.**

(30) Priorité : **02.06.89 FR 8907316**

(43) Date de publication de la demande :
**05.12.90 Bulletin 90/49**

(45) Mention de la délivrance du brevet :
**21.12.94 Bulletin 94/51**

(84) Etats contractants désignés :
**DE GB IT**

(56) Documents cités :
**EP-A- 0 131 818
EP-A- 0 317 352
DE-A- 3 237 845
FR-A- 1 487 054
SOVIET JOURNAL OF QUANTUM ELECTRO-
NICS, vol. 15, no. 9, septembre 1985,
pages1183-1197, Woodbury, NY, US; S.K.
MORSHNEV et al.: "Coherent fiber-opticcommunications (review)"**

(56) Documents cités :
**IEEE JOURNAL OF QUANTUM ELECTRONICS,
vol. QE-20, no. 4, avril 1984, pages 332-334,
New York, US; N.A. OLSSON et al.: "An optical
switching and routing systemusing frequency
tunable cleaved-coupled-cavity semiconductor lasers"**

(73) Titulaire : **FRANCE TELECOM
6, Place d'Alleray
F-75015 Paris (FR)**

(72) Inventeur : **Auffret, René
Kernu Louannec
F-22700 Perros Guirec (FR)**
Inventeur : **Le Bihan, Jean
35 Avenue Victor Hugo
F-29200 Brest (FR)**
Inventeur : **Claveau, Georges
"La Gare" Camlez
F-22450 La Roche Derrien (FR)**

(74) Mandataire : **Mongrédien, André et al
c/o BREVATOME
25, rue de Ponthieu
F-75008 Paris (FR)**

EP 0 401 126 B1

**Description**

La présente invention concerne un procédé de transmission optique de signaux par self-hétérodynage et un système de transmission avec matrice de commutation mettant en oeuvre un tel procédé.

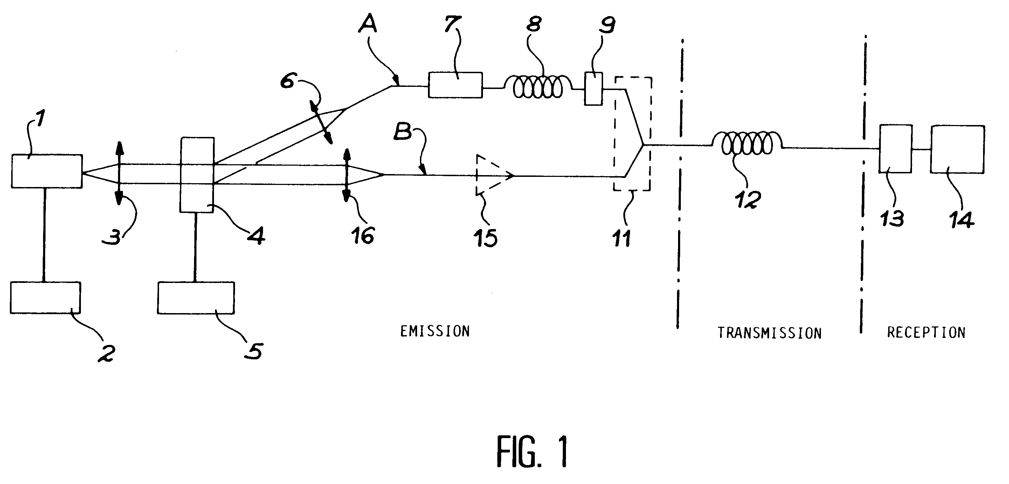

Un système de transmission par self-hétérodynage est constitué comme on peut le voir sur la figure 1 de moyens d'émission , de moyens de transmission et de moyens de réception.

Les moyens d'émission comportent un laser monofréquence 1 commandé par des circuits d'alimentation 2 suivi d'un collimateur 3 pour collimater le faisceau émis par le laser monofréquence. Ces moyens comportent en outre un modulateur acousto-optique 4 excité par un générateur de fréquence, pour séparer en deux le faisceau incident. Ce faisceau se divise ainsi en un faisceau non défléchi empruntant le trajet B et ayant la même fréquence que le faisceau incident et en un faisceau défléchi empruntant le trajet A et de fréquence égale à la fréquence du faisceau incident plus ou moins la fréquence d'excitation du modulateur acousto-optique. Le signe + ou - dépend du mouvement relatif des ondes optiques et acoustiques.

Un modulateur électro-optique 7 permet de moduler en amplitude le signal optique défléchi.

A la sortie du modulateur, le signal optique est retardé par une fibre à maintien de polarisation 8. Ce retard T est supérieur ou égal à $1/\Delta F$, $\Delta F$ étant la largeur spectrale de l'émission du laser 1. Le signal passe ensuite dans un contrôleur de polarisation 9.

Ce contrôleur de polarisation 9 ajuste, une fois pour toutes, la direction de polarisation du faisceau du trajet A sur celle du trajet B.

La sortie du contrôleur de polarisation 9 est connectée à une branche d'un mélangeur optique 11.

Le faisceau non défléchi est focalisé par une optique 10 dans la deuxième branche du mélangeur 11.

Les deux ondes des trajets A et B se retrouvent en sortie du mélangeur 11 avec une même direction de polarisation.

Ces signaux sont véhiculés par les moyens de transmission qui sont constitués par une fibre monomode de transmission 12.

Les moyens de réception sont constitués par un photodétecteur quadratique 13 suivi par un circuit d'amplification et de démodulation 14.

Le mélange des deux ondes se fait au niveau du détecteur quadratique qui détecte le signal de battement à la fréquence intermédiaire fI qui est celle qui commande le modulateur acousto-optique 4.

Ce signal à la fréquence intermédiaire fI contient l'information fournie par le modulateur d'amplitude 7. Cette information est extraite du signal à la fréquence intermédiaire fI par les circuits d'amplification et de démodulation 14.

Comme les fréquences transmises sur le trajet A contenant le signal porteur d'information et sur le trajet B contenant le signal de l'oscillateur local sont très proches, les modifications des directions de polarisation engendrées par la fibre de transmission sont identiques pour les deux faisceaux qui se retrouvent avec des directions de polarisation au niveau du photodétecteur 13.

Lorsqu'on désire augmenter la puissance de l'oscillateur local, on place sur le trajet B dans les moyens d'émission un amplificateur optique à onde progressive 15.

Les moyens de réception en détection hétérodyne "classique" comportent donc un oscillateur local délivrant une onde à une fréquence telle que le mélange du signal incident porteur de l'information et du signal de l'oscillateur local permet d'obtenir une onde à la fréquence intermédiaire. Pour obtenir une onde parfaitement stabilisée, il est nécessaire d'utiliser une commande automatique de fréquence pour agir sur la fréquence optique de l'oscillateur local afin de la stabiliser.

D'autre part, il est nécessaire que la direction de polarisation des deux ondes optiques soit la même pour les deux ondes incidente et locale. Comme la fibre optique ne maintient par cette direction, il est usuel d'utiliser à la réception un circuit pour corriger et contrôler la polarisation incidente. Il peut s'agir, soit d'un contrôleur de polarisation, soit d'une double détection en diversité de polarisation.

La présente invention a pour but de remédier à ces inconvénients. Elle permet en outre de simplifier L'équipement de réception. Cet avantage est considérable dans des systèmes de transmission avec matrice de commutation, de tels systèmes étant utilisés pour des réseaux locaux, car cela conduit à une réduction de l'équipement d'abonnés.

Une demande de brevet européen EP-A-0 131 818 concerne un système de multiplexage de fréquence utilisé pour la transmission par fibres optiques dans le but d'adresser un canal TV parmi N canaux espacés en fréquence. Ce système comporte un oscillateur local et un modulateur acousto-optique qui permet de moduler la fréquence de l'oscillateur local au moyen d'une onde de fréquence donnée reçue par le modulateur. Les différents signaux de sortie de ce modulateur acousto-optique correspondent aux fréquences de battement F0+F, F0+2F, F0-F, F0-2F. Les différentes fréquences porteuses correspondent aux fréquences de battement obtenues en sortie du modulateur acousto-optique, ce modulateur fonctionnant pour cela dans la région de Raman Nath.

La présente invention a pour objet un procédé de transmission optique de signaux par self-hétérodynage vers un ou plusieurs appareils récepteurs parmi N, à partir de moyens de transmission optique comprenant des moyens d'émission de signaux optiques, des moyens de modulation par transposition de fréquence, une liaison par fibres optiques,

qui consiste :

- à transmettre un signal donné sur une ou plusieurs fréquences porteuses vers respectivement un ou plusieurs appareils récepteurs,
- à obtenir la ou les fréquences porteuses par transposition d'une fréquence d'émission au moyen de signaux de commande distincts et sélectionnables en fonction du ou des appareils récepteurs,
- à transmettre sur la même liaison optique, le signal de fréquence d'émission,

caractérisé en ce qu'il consiste à l'émission à :

- utiliser un générateur de signaux pour moduler l'amplitude du signal émis par le laser monofréquence pour générer les signaux de commande permettant d'obtenir une à N fréquences de transposition du signal d'émission,
- sélectionner le signal de commande permettant d'obtenir une fréquence de transposition donnée,
- transmettre le signal à fréquence transposée vers l'appareil récepteur destinataire parmi les N appareils.

Selon un premier aspect de l'invention, le procédé consiste à l'émission à :

- utiliser un générateur multifréquence pour générer une à N fréquences de modulation en tant que signaux de commande,
- utiliser un modulateur acousto-optique pour transposer le signal de fréquence d'émission sur une fréquence porteuse,
- sélectionner une fréquence de modulation parmi N,
- commander le modulateur acousto-optique avec cette féquence de modulation,
- transmettre le signal donné à partir de la fréquence porteuse vers l'appareil récepteur destinataire parmi les N appareils.

Selon un deuxième aspect de l'invention, le procédé consiste à l'émission à :

- utiliser un générateur multi-fréquence pour générer N fréquences de modulation en tant que signaux de commande,
- utiliser un modulateur acousto-optique pour transposer le signal de fréquence d'émission sur N fréquences porteuses,
- sélectionner les N fréquences de modulation,
- commander le modulateur acousto-optique avec ces N fréquences de modulation,
- transmettre le signal donné à partir de ces N fréquences porteuses vers les N appareils récepteurs destinataires.

Selon un troisième aspect de l'invention, le signal de fréquence d'émission est obtenu à partir d'un laser monofréquence.

Selon un quatrième aspect de l'invention, le procédé consiste, à l'émission, à placer un concentrateur optique sur le trajet des ondes défléchies par le modulateur acousto-optique.

Selon un cinquième aspect de l'invention, le procédé consiste, à l'émission, à placer un modulateur électro-optique sur le trajet des signaux transposés en fréquence pour moduler en amplitude ces signaux, cette modulation correspondant à l'information réelle à transmettre.

Selon un sixième aspect de l'invention, le procédé consiste, à l'émission, à placer un mélangeur optique sur le trajet des signaux transposés et modulés en amplitude et sur le trajet du signal de fréquence d'émission non défléchi par le modulateur acousto-optique, qui délivre ces signaux avec une même direction de polarisation.

Selon un autre aspect de l'invention, le procédé consiste à transmettre les signaux issus des moyens d'émission sur une fibre monomode.

Selon un autre aspect de l'invention, le procédé consiste, à la réception, à placer dans chaque appareil récepteur un démodulateur calé sur une fréquence correspondant à l'une des fréquences de modulation.

Selon un autre aspect de l'invention, le procédé consiste, à la réception, à placer un diffuseur à l'entrée de l'appareil récepteur.

L'invention consiste également en un système de transmission avec matrice de commutation, destiné à transmettre des signaux d'un appareil d'abonné parmi N à un autre appareil d'abonné parmi N-1, caractérisé en ce qu'il comprend :

- des moyens de transmission optique,
- N ensembles d'émission, chaque ensemble étant susceptible d'émettre un signal donné sur l'une quelconque parmi N fréquences porteuses, d'obtenir la fréquence porteuse désirée par transposition d'une fréquence d'émission au moyen d'un signal de commande sélectionné en fonction de l'appareil d'abonné destinataire, et susceptible d'émettre également vers les moyens de transmission le signal de fréquence d'émission,
- des moyens de gestion des fréquences de transposition susceptibles d'appliquer l'un quelconque des N signaux de commande à l'un quelconque des N ensembles d'émission,
- un générateur d'appel susceptible d'envoyer à l'entréee de l'ensemble d'émission affecté à l'abonné appelé une information d'appel permettant aux moyens de gestion d'affecter la fréquence de transposition désirée à un ensemble et le signal de modulation d'amplitude approprié.

Selon un autre aspect de l'invention, chaque appareil d'abonné est équipé d'un démodulateur calé sur une fréquence intermédiaire de réception correspondant à une fréquence de transposition particulière.

Selon un autre aspect de l'invention, les moyens de gestion des fréquences sont constitués de N oscillateurs adressables sur N fréquences.

Selon un autre aspect de l'invention, chaque ensemble d'émission comporte :
- un laser monofréquence,
- un modulateur acousto-optique,
- un concentrateur optique,
- un mélangeur optique,
- un modulateur d'amplitude,
- un contrôleur de polarisation.

Selon la variante de réalisation, chaque ensemble d'émission comprend :
- un laser monofréquence ;
- un générateur de signal ;
- un premier coupleur ;
- un modulateur d'amplitude ;
- un deuxième coupleur.

Dans ce cas les moyens de gestion des fréquences sont constitués par le générateur de signal.

D'autres particularités et avantages de l'invention apparaîtront à la lecture de la description faite à titre d'exemple illustratif et nullement limitatif en regard des dessins annexés sur lesquels :
- la figure 1 représente un dispositif de transmission par self-hétérodynage selon l'art antérieur,
- la figure 2A représente le schéma d'un dispositif permettant de mettre en oeuvre le procédé conforme à l'invention selon un premier mode de réalisation,
- la figure 2B représente le schéma d'un dispositif permettant de mettre en oeuvre le procédé conforme à l'invention selon un deuxième mode de réalisation,
- la figure 3 représente le schéma d'un système de transmission conforme à l'invention.

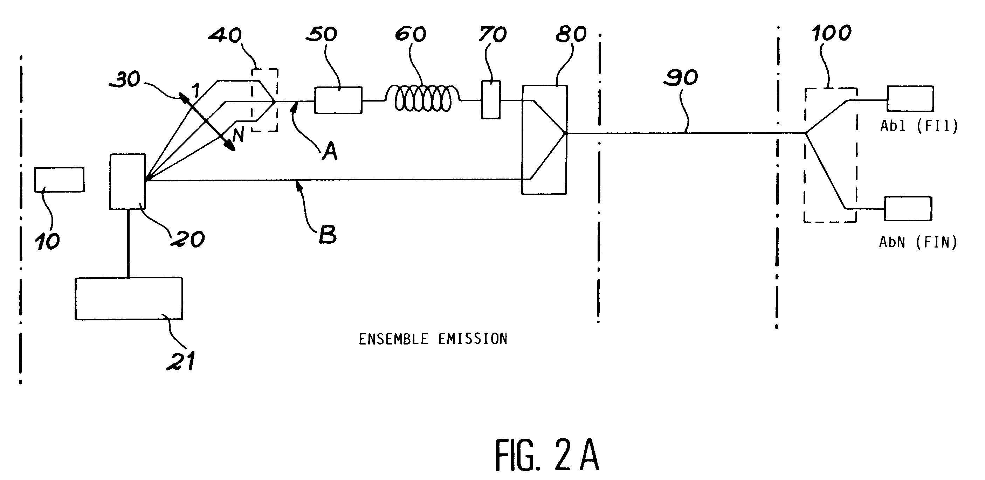

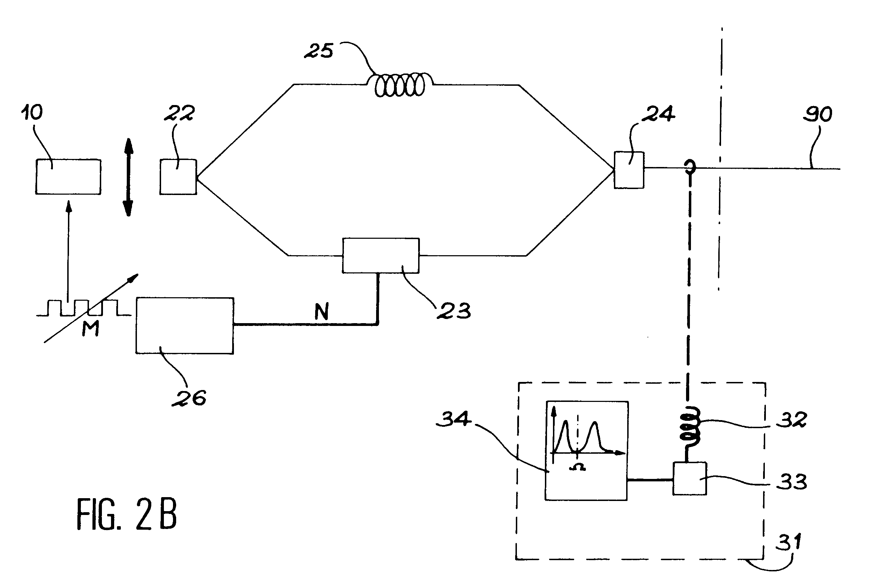

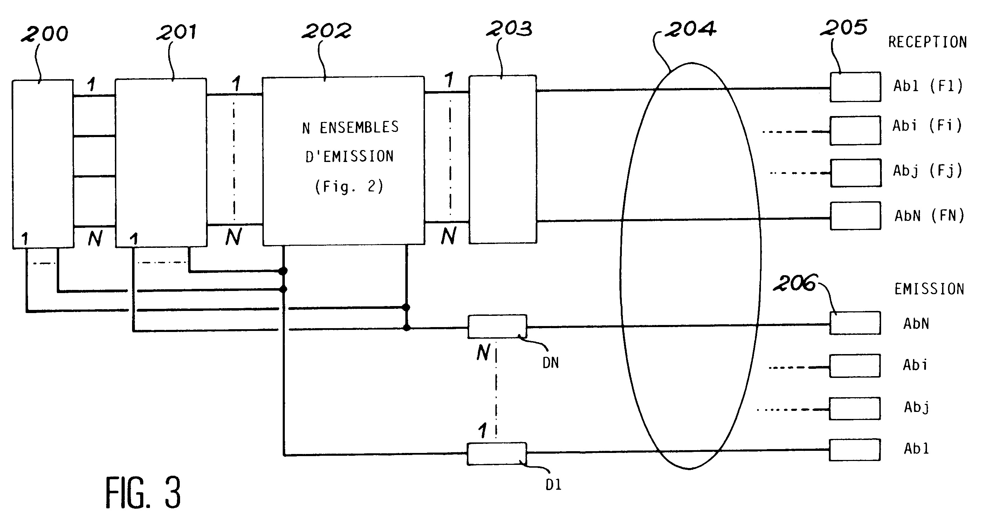

Le schéma de la figure 2 représente un dispositif de transmission par self-hétérodynage permettant de mettre en oeuvre le procédé de transmission selon l'invention suivant un premier mode de réalisation.

Ce dispositif permet de transmettre des signaux optiques vers un ou plusieurs appareils récepteurs Ab1-AbN parmi N.

Ce dispositif comporte des moyens de transmission proprement dits, constitués par une fibre optique 90 et un ensemble d'émission comportant des moyens d'émission de signaux optiques, des moyens de modulation par transposition de fréquence.

Les moyens d'émission comportent un laser monofréquence 10.

Les moyens de modulation comportent un modulateur acousto-optique 20.

L'ensemble d'émission comporte en outre un concentrateur formé par un peigne de fibres 30 et un mélangeur 40. Cet ensemble comporte également un modulateur d'amplitude 50, une fibre de maintien de polarisation 60, un contrôleur de polarisation 70, un mélangeur 80.

La fréquence d'émission $f_o$ du laser monofréquence 10 subit une transposition réalisée par le modulateur 20. Le modulateur 20 reçoit pour cela un signal de fréquence désiré, obtenu par un générateur de fréquence 21, cette fréquence étant la fréquence de modulation.

Selon l'invention, la fréquence de modulation est sélectionnée en fonction de l'abonné destinataire auquel on aura affecté une fréquence particulière parmi N.

Ainsi, on sélectionne la fréquence de modulation F1 pour l'abonné auquel on a affecté cette fréquence F1 et la fréquence FN pour l'abonné auquel on a affecté la fréquence FN.

Dans le cas où l'on désire envoyer le même signal à l'ensemble des N abonnés, on sélectionne les N fréquences de modulation F1-FN.

Le faisceau émis par le laser monofréquence 1 commandé par ses circuits d'alimentation (non représentés) passe dans le modulateur acousto-optique excité par le générateur de fréquence 21.

Le faisceau incident est séparé en deux à la sortie du modulateur 20. Le faisceau défléchi suit le trajet A tandis que le faisceau non défléchi suit le trajet B.

Le faisceau non défléchi a la même fréquence que le signal incident. Le faisceau défléchi a une fréquence égale à celle du faisceau incident plus ou moins la fréquence de modulation (fréquence d'excitation du modulateur acousto-optique).

Chaque fois que l'on change la fréquence de modulation du modulateur acousto-optique, non seulement on change la fréquence du faisceau défléchi, mais également sa direction θm qui est égale à arc sin λ, λ étant la longueur d'onde de la lumière, Ω le pas du réseau acoustique dans le modulateur, Ω étant donné par la relation Ω=v/F, où v est la vitesse de propagation des ondes acoustiques dans le matériau, F la fréquence de modulation (en pratique F est soit F1, soit F2,... soit FN) et correspond à la fréquence intermédiaire au niveau de la détection à la réception.

Pour N fréquences intermédiaires discrètes, on dispose donc de N fréquences de modulation engendrant N directions pour le faisceau défléchi ($\theta_1$, ...$\theta_n$).

Une optique appropriée focalise les faisceaux dans le peigne de fibres 30, et les mélange sur une seule fibre dans le mélangeur 40.

Lorsqu'on adresse simultanément toutes les fréquences, on récupère simultanément la même information sur N fréquences intermédiaires.

Lorsqu'on adresse séquentiellement le modulateur, on peut distribuer le même canal d'information séquentiellement sur les différentes fréquences intermédiaires.

Le signal porteur de l'information est obtenu comme décrit à propos de la figure 1, c'est-à-dire par modulation d'amplitude.

Le dispositif de transmission comporte outre l'ensemble d'émission et la ligne de transmission, un ensemble de réception constitué par les N appareils de réception des abonnés et un diffuseur 100 permettant de diffuser le signal transmis vers les N abonnés.

Sur la figure 2B, la lumière émise par un laser semi-conducteur monofréquence 10 est injectée dans un coupleur 22. Dans l'une des branches A du coupleur on place une longueur L de fibre 25 telle que L>lc (longueur de cohérence de la source laser). Dans la branche B on place le modulateur d'amplitude 23. Les signaux des deux branches sont recombinés dans le coupleur 24 et acheminés vers les moyens de transmission 90 (ou vers le photodétecteur 33).

Lorsque le laser est modulé par des signaux rectangulaires périodiques M d'amplitude réglable, dont la période t satisfait la condition exprimée précédemment t=2T/(2N+1) (T retard induit par la fibre 25, T=L*n/c≠5ns/m), on observe à l'analyseur 34 un glissement du spectre d'autocorélation du laser, d'autant plus important que l'amplitude du signal M est grande. On a ainsi réalisé un nouveau translateur de fréquence.

L'avantage de cette nouvelle solution par rapport à celle du modulateur acousto-optique est la suivante : suppression du modulateur acousto-optique, de l'optique de collimation 30 et du coupleur 40 de la figure 2A. D'autre part l'excursion en fréquence engendrée par le laser est plus importante que celle obtenue avec le modulateur acousto-optique. On obtient couramment des excursions supérieures au gigahertz pour des amplitudes de modulation de quelques milliampères. Ce point est capital car il commande, pour un débit donné, le nombre d'abonnés que l'on peut adresser. Nab=delta F/2B (delta f : excursion du laser, B : bande des signaux transmis).

Cette solution impose cependant certaines contraintes au signal numérique véhiculant l'information, elles seront analysées en détail par la suite.

Lorsque l'on applique sur le modulateur d'amplitude 23 un signal N synchrone de celui M appliqué au laser, le signal optique issu de la branche B ne comporte plus qu'une seule fréquence optique F0 ou F1 suivant la phase relative des modulations laser et du modulateur d'amplitude. La fréquence F1 correspond à la fréquence du laser pour les forts courants de modulation et F0 pour les courants faibles. Lorsque l'on suppose que la modulation appliquée au modulateur 23 est telle que le signal de la branche B ne comporte que la composante F1, il est en opposition avec le signal de la branche A, signal qui comporte tantôt la fréquence F1, tantôt F0, et ceci cadencé par la modulation du laser.

Les moyens 31 d'analyse du spectre permettent de mieux comprendre les phénomènes de transposition de fréquence obtenus par cette variante.

Description des états sur le photodétecteur :

1) le signal de la branche B émet F1 qui bat avec le signal F0 de la branche A et génère après détection un signal à la fréquence F=F1-F0,

2) au cours de la demi-période suivante, il n'y a pas de signal émis par la branche B, il ne peut donc y avoir de battement avec le signal F0 émis par A au même instant. Le signal résultant présente périodiquement un signal de fréquence F=F1-F0, espacé de périodes sans signal. La variation de l'amplitude du courant laser modifie la fréquence F.

Lorsque, au lieu d'appliquer au modulateur 23 un signal récurrent, on applique un signal N numérique NRZ dont la fréquence horloge est synchrone de celui appliqué au laser, toutes les fréquences du spectre du signal NRZ sont des sous multiples de l'horloge et satisfont donc à la condition initiale (2N+1)t=T jusqu'à la limite t=2T qui correspond à la fréquence la plus basse pouvant être transmise. Le code NRZ peut présenter de longues suites de "1" ou de "0", correspondant aux composantes BF, le brouillage permet de remédier à ce défaut. D'autres codes peuvent être envisagés dans la mesure où tous les bits sont en phase avec l'horloge, le code RZ par exemple.

Les signaux M et N sont générés par le générateur 26.

Relation entre la largeur spectrale du laser et la fréquence minimum transmissible :
- longueur de cohérence du laser : Lc=c/delta F (c: vitesse de la lumière),
- retard dans la fibre : T=Lc*n/c=n/delta F (n: indice de la fibre),
- condition limite : t=2T.

Relation entre la période de la fréquence minimum et la largeur spectrale du laser :
$$t = 2 * n/delta F$$

L'élément décrit précédemment représente l'équivalent de la fonction "EMISSION" décrite à propos de la figure 2A. Le schéma général du réseau de commutation Fig.3 est identique dans le cas de cette variante de réalisation, à ceci près que l'on gère l'amplitude des signaux qui module les lasers des divers blocs d'émission au lieu des fréquences des modulateurs acousto-optiques.

La figure 3 représente un système de transmission conforme à l'invention, dans lequel est appliqué le procédé de transmission qui vient d'être décrit et illustré au moyen du schéma de la figure 2A.

Ce système de transmission comporte une matrice de commutation fréquentielle et permet ainsi de transmettre des signaux d'un appareil d'abonné Abi parmi N à un autre appareil d'abonné Abj parmi les N-1 autres abonnés.

Le système comporte des moyens de transmission optique de signaux.

Il comporte en outre N ensembles d'émission susceptibles d'émettre un signal donné sur l'une quelconque parmi N fréquences porteuses. Les N ensembles d'émission sont regroupés dans le bloc 202. Chaque ensemble correspond à un ensemble tel que décrit à propos de la figure 2A soit à un ensemble tel que décrit à propos de la figure 2B.

Le système comporte en outre des moyens de gestion des fréquences 201 permettant de générer et d'affecter la ou les fréquences de modulation F1-FN appliquées aux modulateurs acousto-optiques de l'un quelconque des N ensembles d'émission, constituant le bloc 202.

Le système comporte également un générateur d'appel 200 apte à envoyer aux entrées des moyens de gestion des fréquences, une information d'appel permettant à ces moyens d'affecter la fréquence de modulation désirée à un ensemble d'émission et le signal de modulation d'amplitude approprié.

Chaque ensemble d'émission du bloc 202 est apte à recevoir l'une quelconque des N fréquences de modulation, et l'un quelconque parmi N signaux d'appel issus des appareils des abonnés.

Chaque appareil d'abonné Abi comporte une partie génération d'un code d'appel regroupée sous la référence 206 et une partie détection regroupée sous la référence 205. Bien entendu ces deux parties (détection et génération du code d'appel) se trouvent en pratique dans chaque appareil d'abonné.

Le système comporte en outre un détecteur de code d'appel D1-DN placé sur le trajet des signaux de chaque appareil d'abonné.

Ces détecteurs sont constitués de photorécepteurs et le signal de sortie sert à commander le générateur d'appel 200, les moyens de gestion des fréquences 201 et les entrées de modulation d'amplitude des ensembles d'émission du bloc 202.

Le système comporte en outre un mélangeur 203 permettant de mélanger les signaux issus de chaque ensemble d'émission du bloc sur une fibre optique du réseau 204.

L'élément 202 permet par conséquent de réaliser une matrice de commutation fréquentielle NxN. Chacun des N ensembles d'émission permet de s'adresser à chacun des N-1 autres abonnés par sélection d'une fréquence de modulation correspondant à la fréquence intermédiaire de détection de l'abonné destinataire.

Les moyens de gestion sont constitués de N oscillateurs adressables sur N fréquences. Le générateur d'appel est constitué de portes logiques permettant de faire correspondre à l'ensemble d'émission d'un abonné Abi appelant, la fréquence Fj de l'abonné Abj.

L'établissement d'une communication se déroule de la manière suivante.

L'abonné Ai appelle l'abonné Aj par sa voie remontante, l'organe de gestion à partir de l'information reçue affecte les fréquences sur les modulateurs acousto-optiques des blocs émissions des abonnés Ai et Aj, Fj pour Ai et Fi pour Aj. Le signal d'appel est envoyé vers l'abonné Aj qui peut entrer en communication dès le décrochage de son appareil.

En effet, si l'abonné Ab1 veut communiquer avec l'abonné AbN par exemple, il émet, à partir de la partie émission 206, vers le centre de communication 202. Son signal est tout d'abord transposé optique-électrique par le photorécepteur 207, puis dirigé vers l'ensemble émission du bloc 202 qui lui est affecté et vers l'organe de gestion des fréquences 201.

Ce centre de gestion affecte à l'ensemble d'émission de l'abonné Ab1 la fréquence FN de l'abonné appelé et l'ensemble d'émission de l'abonné AbN appelé la fréquence F1 de l'abonné appelant.

Parallèlement, l'organe de génération d'appel 200 envoie sur l'entrée de l'ensemble d'émission de l'abonné appelant calé sur la fréquence FN l'information d'appel qui sera détectée par le récepteur 205 de l'abonné appelé. Dès le décrochage, la liaison est établie puisque les fréquences des blocs d'émission des abonnés appelants et appelés ont été préalablement affectées.

Les deux abonnés Ab1 et AbN étant en communication, rien ne s'oppose à ce que deux autres abonnés distincts des deux premiers entrent simultanément en communication et ainsi de suite.

Dans le système décrit, chaque ensemble d'émission fonctionne à la demande sur l'une ou l'autre des N fréquences. On peut envisager une autre structure où les ensembles d'émission fonctionnent sur plusieurs fréquences simultanément. Dans ce cas, chaque bloc d'émission peut diffuser vers l'ensemble des abonnés.

Une autre hypothèse peut être envisagée où chaque ensemble d'émission a une seule fréquence mais où chaque abonné a une réception accordable et peut recevoir les N fréquences ; on peut alors réaliser une grille de diffusion où chaque entrée du bloc émission 202 reçoit non pas les signaux émis par les abonnés mais un programme source. Les N programmes sources peuvent être alors diffusés vers les N abonnés.

Bien entendu, on choisit les fréquences d'émission des lasers des ensembles d'émission suffisamment différentes pour que les battements optiques résultants ne puissent interférer avec les fréquences de réception des divers abonnés. Il suffit pour cela que l'écart des fréquences d'émission des divers lasers soit supérieur à la fréquence intermédiaire de réception la plus élevée. Ce qui ne pose guère de problème dans la pratique puisqu'un écart en longueur d'onde d'un angström correspond à un écart de fréquence de 12 à 13 GHz suivant que l'on travaille à 1,3 ou 1,5 $\mu$m, ce qui est largement supérieur aux fréquences intermédiaires que l'on peut obtenir à partir d'un modulateur acousto-optique.

## Revendications

1. Procédé de transmission optique de signaux par self-hétérodynage vers un ou plusieurs appareils récepteurs (Ab1-AbN) parmi N, à partir de moyens de transmission optique comprenant des moyens d'émission de signaux optiques, des moyens de modulation (20, 21) par transposition de fréquence, une liaison par fibres optiques (90),

    qui consiste :
    - à transmettre un signal donné sur une ou plusieurs fréquences porteuses vers respectivement un ou plusieurs appareils récepteurs,
    - à obtenir la ou les fréquences porteuses par transposition d'une fréquence d'émission au moyen de signaux de commande distincts et sélectionnables en fonction du ou des appareils récepteurs,
    - à transmettre sur la même liaison optique, le signal de fréquence d'émission.

    caractérisé en ce qu'il consiste à l'émission à :
    - utiliser un générateur de signaux (M) pour moduler l'amplitude du signal d'émission pour générer les signaux de commande permettant d'obtenir une à N fréquences de transposition de ce signal d'émission,
    - sélectionner le signal de commande permettant d'obtenir une fréquence de transposition donnée,
    - transmettre le signal à fréquence transposée vers l'appareil récepteur destinataire parmi les N appareils.

2. Procédé de transmission optique selon la revendication 1, caractérisé en ce qu'il consiste à l'émission à :
    - utiliser un générateur multi-fréquence pour générer une à N fréquences de modulation en tant que signaux de commande,
    - utiliser un modulateur acousto-optique pour transposer le signal de fréquence d'émission sur une fréquence porteuse,
    - sélectionner une fréquence de modulation parmi N,
    - commander le modulateur acousto-optique avec cette féquence de modulation,
    - transmettre le signal donné à partir de la fréquence porteuse vers l'appareil récepteur destinataire parmi les N appareils.

3. Procédé de transmission optique selon la revendication 1, caractérisé en ce qu'il consiste à l'émission à :
    - utiliser un générateur multi-fréquence pour générer N fréquences de modulation en tant que signaux de commande,
    - utiliser un modulateur acousto-optique pour transposer le signal de fréquence d'émission sur N fréquences porteuses,
    - sélectionner les N fréquences de modulation,
    - commander le modulateur acousto-optique avec ces N fréquences de modulation,
    - transmettre le signal donné à partir de ces N fréquences porteuses vers les N appareils récepteurs destinataires.

4. Procédé de transmission optique selon l'une quelconque des revendications 1 à 3, caractérisé en ce que le signal de fréquence d'émission est obtenu à partir d'un laser monofréquence.

5. Procédé de transmission optique selon l'une quelconque des revendications 1 à 4, caractérisé en ce qu'il consiste, à l'émission, à placer un concentrateur optique sur le trajet des ondes défléchies par le modulateur acousto-optique.

6. Procédé de transmission optique selon l'une quelconque des revendications 1 à 5, caractérisé en ce qu'il consiste, à l'émission, à placer un modulateur électro-optique sur le trajet des signaux transposés en fréquence pour moduler en amplitude ces signaux, cette modulation correspondant à l'information réelle à transmettre.

7. Procédé de transmission optique selon l'une quelconque des revendications 1 à 6, caractérisé en ce qu'il consiste, à l'émission, à placer un mélangeur optique sur le trajet des signaux transposés et modulés en amplitude et sur le trajet du signal de fréquence d'émission non défléchi par le modulateur acousto-optique, qui délivre ces signaux avec une même direction de polarisation.

8. Procédé de transmission optique selon l'une quelconque des revendications 1 à 7, caractérisé en ce qu'il consiste à transmettre les signaux issus des moyens d'émission sur une fibre mononode.

9. Procédé de transmission optique selon l'une quelconque des revendications 1 à 8, caractérisé en ce qu'il consiste, à la réception, à placer dans chaque appareil récepteur un démodulateur calé sur une fréquence correspondant à l'une des fréquences de modulation.

10. Procédé de transmission optique selon l'une quelconque des revendications 1 à 9, caractérisé en ce qu'il consiste, à la réception, à placer un diffuseur à l'entrée de l'appareil récepteur.

11. Système de transmission avec matrice de commutation, destiné à transmettre des signaux d'un appareil d'abonné parmi N (206) à un autre appareil d'abonné parmi N-1 (205), caractérisé en ce qu'il comprend :
    - des moyens de transmission optique (204),
    - N ensembles d'émissions (202), chaque ensemble étant susceptible d'émettre un signal donné sur l'une quelconque parmi N fréquences porteuses, d'obtenir la fréquence porteuse désirée par transposition d'une fréquence d'émission au moyen d'un signal de commande sélectionné en fonction de l'appareil d'abonné destinataire, et susceptible d'émettre également vers les moyens de transmission le signal de fréquence d'émission,
    - des moyens de gestion des fréquences de transposition (201) susceptibles d'appliquer l'un quelconque des N signaux de commande à l'un quelconque des N ensembles d'émission,
    - un générateur d'appel (200) susceptible d'envoyer à l'entrée de l'ensemble d'émission affecté à l'abonné appelé, une information d'appel permettant aux moyens de gestion d'affecter la fréquence de transposition désirée à un ensemble et le signal de modulation d'amplitude approprié.

12. Système de transmission selon la revendication 11, caractérisé en ce que chaque appareil d'abonné est équipé d'un démodulateur calé sur une fréquence intermédiaire de réception correspondant à une fréquence de transposition particulière.

13. Système de transmission selon la revendication 11 ou 12, caractérisé en ce que les moyens de gestion des fréquences de transposition sont constitués de N oscillateurs adressables sur N fréquences.

14. Système de transmission selon l'une quelconque des revendication 11 à 13, caractérisé en ce que chaque ensemble d'émission comporte :
    - un laser monofréquence (10),
    - un modulateur acousto-optique (20),
    - un concentrateur optique (30),
    - un mélangeur optique (40),
    - un modulateur d'amplitude (50),
    - un contrôleur de polarisation.

15. Système de transmission selon les revendications 11 et 12 , caractérisé en ce que les moyens de gestion des fréquences de transposition sont constitués par un générateur de signal (26).

16. Système de transmission selon l'une quelconque des revendicationt 11 à 12 et 15, caractérisé en ce que chaque ensemble d'émission comporte :
    - un laser monofréquence (10) ;
    - un générateur de signal (26) ;
    - un premier coupleur (22) ;
    - un modulateur d'amplitude (23) ;
    - un deuxième coupleur (24).

**Patentansprüche**

1. Selbstheterodynes optisches Signalübertragungsverfahren zu einem oder mehreren von N Empfangsgeräten (Ab1 - AbN) auf der Grundlage von optischen Übertragunseinrichtungen, die Sendeeinrichtungen für optische Signale, Einrichtungen (20,21) zur Frequenzumsetzungsmodulation, eine optische Faserverbindung (90) haben, das darin besteht:
    - ein gegebenes Signal auf einer oder mehreren Trägerfrequenzen zu jeweils einem oder mehreren Empfangsgeräten zu übertragen,
    - die Trägerfrequenz oder Trägerfrequenzen durch Umsetzung einer Sendefrequenz mittels bestimmter und als Funktion des oder der Empfangsgeräte auswählbarer Steuersignale zu erhalten,
    - auf derselben optischen Verbindung das Signal der Sendefrequenz zu übertragen,
    **dadurch gekennzeichnet**, daß es bei dem Senden darin besteht:
    - einen Signalgenerator (M) zu verwenden, um die Amplitude des Sendesignals zu modulieren, damit die Steuersignale erzeugt werden, die ermöglichen, eine bis N Umsetzungsfrequenzen dieses Sendesignals zu erhalten,
    - das Steuersignal auszuwählen, das ermöglicht, eine gegebene Umsetzungsfrequenz zu erhalten,
    - zu dem von den N Geräten empfangsbestimmten Empfangsgerät das Signal mit der umgesetzten Frequenz zu übertragen.

2. Optisches Übertragungsverfahren gemäß Anspruch 1, **dadurch gekennzeichnet**, daß es beim Senden darin besteht:
    - einen Mehrfrequenzgenerator zu verwenden, um eine bis N Modulationsfrequenzen wie Steuersignale zu erzeugen,
    - einen akusto-optischen Modulator zu verwenden, um das Signal der Sendefrequenz auf eine Trägerfrequenz umzusetzen,
    - eine Modulationsfrequenz aus N auszuwählen,
    - den akusto-optischen Modulator mit dieser Modulationsfrequenz zu steuern,

- das gegebene Signal auf der Grundlage der Trägerfrequenz zu dem von den N Empfangsgeräten empfangsbestimmten Gerät zu übertragen.

3. Optisches Übertragungsverfahren gemäß Anspruch 1, **dadurch gekennzeichnet**, daß es beim Senden darin besteht:
   - einen Mehrfrequenzgenerator zu verwenden, um N Modulationsfrequenzen wie Steuersignale zu erzeugen,
   - einen akusto-optischen Modulator zu verwenden, um das Signal der Sendefrequenz auf N Trägerfrequenzen umzusetzen,
   - die N Modulationsfrequenzen auszuwählen,
   - den akusto-optischen Modulator mit diesen N Modulationsfrequenzen zu steuern,
   - das gegebene Signal auf der Grundlage dieser N Trägerfrequenzen zu den N empfangsbestimmten Empfangsgeräten zu übertragen.

4. Optisches Übertragungsverfahren gemäß irgendeinem der Ansprüche 1 bis 3, **dadurch gekennzeichnet**, daß das Signal der Sendefrequenz ausf der Grundlage von einem monofrequenten Laser erhalten wird.

5. Optisches Übertragungsverfahren gemäß irgendeinem der Ansprüche 1 bis 4, **dadurch gekennzeichnet**, daß es beim Senden darin besteht, eine optische Sammeleinrichtung in dem Weg der von dem akusto-optischen Modulator abgelenkten Wellen anzuordnen.

6. Optisches Übertragungsverfahren gemäß irgendeinem der Ansprüche 1 bis 5, **dadurch gekennzeichnet**, daß es beim Senden darin besteht, einen elektro-optischen Modulator in dem Weg der frequenzumgesetzten Signale anzuordnen, um diese Signale amplitudenmäßig zu modulieren, wobei diese Modulation der tatsächlichen, zu übertragenden Information entspricht.

7. Optisches Übertragungsverfahren gemäß irgendeinem der Ansprüche 1 bis 6, **dadurch gekennzeichnet**, daß es darin besteht, beim Senden eine optische Mischeinrichtung in dem Weg der umgesetzten und amplitudenmäßig modulierten Signale und in dem Weg des Signals der Sendefrequenz anzuordnen, das von dem akusto-optischen Modulator nicht abgelenkt worden ist, der diese Signale mit der gleichen Polarisationsrichtung liefert.

8. Optisches Übertragungsverfahren gemäß irgendeinem der Ansprüche 1 bis 7, **dadurch gekennzeichnet**, daß es darin besteht, die von den Sendeeinrichtungen ausgegebenen Signale auf eine Einmoden-Faser zu übertragen.

9. Optisches Übertragungsverfahren gemäß irgendeinem der Ansprüche 1 bis 8, **dadurch gekennzeichnet**, daß es darin besteht, beim Empfang in jedem Empfangsgerät einen Demodulator anzuordnen, der auf eine den Modulationsfrequenzen entsprechende Frequenz festgelegt ist.

10. Optisches Übertragungsverfahren gemäß irgendeinem der Ansprüche 1 bis 9, **dadurch gekennzeichnet**, daß es darin besteht, beim Empfang einen Diffusor am Eingang des Empfangsgeräts anzuordnen.

11. Übertragungssystem mit Schaltmatrix, das dazu bestimmt ist, Signale eines Abonnenten-Geräts von N (206) an ein anderes von N-1 (205) Abonennten-Geräten zu übertragen, **dadurch gekennzeichnet**, daß es umfaßt:
    - optische Übertragungseinrichtungen (204),
    - N Sendeeinheiten (202), wobei jede Einheit ein gegebenes Signal auf irgendeiner von N Trägerfrequenzen aussenden kann, die erwünschte Trägerfrequenz durch Umsetzung einer Sendefrequenz mittels eines in Abhängigkeit von dem empfangsbestimmten Abonennten-Gerät ausgewählten Steuersignals zu erhalten und ebenfalls zu den Sendeeinrichtungen das Signal der Sendefrequenz aussenden kann,
    - eine Verwaltungseinrichtung der Umsetzungsfrequenzen (201), die irgendeines der N Steuersignale an irgendeine der N Sendeeinheiten anlegen kann,
    - einen Anrufgenerator (200), der an den Eingang der dem angerufenen Abonnenten zugeordneten Sendeeinheit eine Anrufinformation, die der Verwaltungseinrichtung ermöglicht, die erwünschte Umsetzungsfrequenz einer Einheit zu zuordnen und das geeignete Signal mit modulierter Amplitude schicken kann.

12. Übertragungssystem gemäß Anspruch 11, dadurch gekennzeichnet, daß jedes Abonennten-Gerät mit einem Demodulator ausgerüstet ist, der auf eine Empfangszwischenfrequenz festgelegt ist, die einer bestimmten Umsetzungsfrequenz entspricht.

13. Übertragungssystem gemäß Anspruch 11 oder 12, dadurch gekennzeichnet, daß die Verwaltungseinrichtung für die Umsetzungsfrequenzen von N Oszillatoren gebildet ist, die auf N Frequenzen adressierbar sind.

14. Übertragungssystem gemäß irgendeinem der Ansprüche 11 bis 13, dadurch gekennzeichnet, daß jede Sendeeinheit umfaßt:
    - einen monofrequenten Laser (10),
    - einen akusto-optischen Modulator (20),
    - eine optische Sammeleinrichtung (30),
    - eine optische Mischeinrichtung (40),
    - einen Amplitudenmodulator (50),
    - eine Steuereinrichtung für die Polarisation.

15. Übertragungssystem gemäß den Ansprüchen 11 und 12, dadurch gekennzeichnet, daß die Verwaltungseinrichtung für die Umsetzungsfrequenzen von einem Signalgenerator (26) gebildet sind.

16. Übertragungssystem gemäß irgendeinem der Ansprüche 11 bis 12 und 15, dadurch gekennzeichnet, daß jede Sendeeinheit umfaßt:
    - einen monofrequenten Laser (10);
    - einen Signalgenerator (26);
    - eine erste Kopplungseinrichtung (22);
    - einen Amplitudenmodulator (23);
    - eine zweite Kopplungseinrichtung (24).

**Claims**

1.  Process for optical transmission of signals by self-heterodyning to one or more of N receivers (Ab1-AbN), from an optical transmission means comprising an optical signal emission means, a modulation means (20, 21) by frequency transposition, and a connection by optical fibres (90), comprising:
    transmitting a given signal on one or more carrier frequencies respectively to one or more receivers,
    obtaining the carrier frequency or frequencies by transposition of an emission frequency by one or more modulation frequencies which are distinct and can be selected as a function of the receiver or receivers, and
    transmitting the emission frequency signal on the same optical connection,
    characterized in that on emission it comprises:
    using a signal generator (M) for modulating the amplitude of the signal emitted by the monofrequency laser in order to generate control signals making it possible to obtain one to N transposition frequencies of the emission signal,
    selecting the control signal making it possible to obtain a given transposition frequency,
    transmitting the signal at the transposed frequency to the destination receiving apparatus from among the N apparatus.

2.  Optical transmission method according to claim 1, characterized in that on emission it comprises:
    using a multifrequency generator to generate one to N modulation frequencies, as control signals,
    using an acoustooptic modulator to transpose the emission frequency signal on a carrier frequency,
    selecting one modulation frequency from among N,
    controlling the acoustooptic modulator with said modulation frequency,
    transmitting said given signal from the carrier frequency to the addressee receiver from among the N receivers.

3.  Optical transmission method according to claim 1, characterized in that it comprises:
    using a multifrequency generator to generate N modulation frequencies, as control signals,
    using an acoustooptic modulator to transpose the emission frequency signal on N carrier frequencies,
    selecting N modulation frequencies,
    controlling the acoustooptic modulator with said N modulation frequencies,
    transmitting the given signal from said N carrier frequencies to N addressee receivers.

4.  Optical transmission method according to any one of the claims 1 to 3, characterized in that the emission frequency signal is obtained from a monofrequency laser.

5.  Optical transmission method according to any one of the claims 1 to 4, characterized in that it comprises, on emission, placing an optical concentrator on the path of the waves deflected by the acoustooptic modulator.

6.  Optical transmission method according to any one of the claims 1 to 5, characterized in that it comprises, on emission, placing an electrooptic modulator on the path of the signals transposed in frequency to amplitude modulate said transposed signals, said modulation corresponding to the actual data to be transmitted.

7.  Optical transmission method according to any one of the claims 1 to 6, characterized in that it comprises, on emission, placing an optical mixer on the path of the signals transposed and amplitude modulated and on the path of the emission frequency signal not deflected by the acoustooptic modulator, which delivers said signals with the same polarization direction.

8.  Optical transmission method according to any one of the claims 1 to 7, characterized in that the signals coming from the emission means are transmitted on a monomode fibre.

9. Optical transmission method according to any one of the claims 1 to 8, characterized in that it comprises, on reception, placing in each receiver a demodulator locked on a frequency corresponding to one of the modulation frequencies.

10. Optical transmission method according to any one of the claims 1 to 9, characterized in that it comprises, on reception, placing a distributor at the input of the receiver.

11. Transmission system with a switching matrix, for transmitting signals from one subscriber set among N (206) to another subscriber set among N-1 (205), characterized in that it comprises:
optical transmission means (204),
N emission units (202), each unit for emitting a given signal on any one of N carrier frequencies, to obtain the desired carrier frequency by transposition of an emission frequency by a control signal selected as a function of the addressee subscriber set, and also for emitting the emission frequency signal to the transmission means,
means (201) for controlling modulation frequencies for applying any one of N modulation frequencies to any one of N emission units,
a calling generator (200) for sending, to the input of the emission unit assigned to the caller subscriber, calling data making it possible for the control means to assign the desired transposition frequency to a unit and the suitable amplitude modulation signal.

12. Transmission system according to claim 11, characterized in that each subscriber set is equipped with a demodulator locked on an intermediate receiving frequency corresponding to a particular transposition frequency.

13. Transmission system according to claim 11 or 12, characterized in that the transposition frequency control means consists of N oscillators which can be addressed on N frequencies.

14. Transmission system according to any one of the claims 11 to 13, characterized in that each emission unit comprises: a monofrequency laser (10), an acoustooptical modulator (20), an optical concentrator (30), an optical mixer (40), an amplitude modulator (50) and a polarization controller.

15. Transmission system according to claims 11 and 12, characterized in that the transposition frequency control means are constituted by a signal generator (26).

16. Transmission system according to any one of the claims 11, 12 and 15, characterized in that each emission unit comprises a monofrequency laser (10), a signal generator (26), a first coupler (22), an amplitude modulator (23) and a second coupler (24).

RECEPTION

TRANSMISSION

EMISSION

FIG. 1

ENSEMBLE EMISSION

FIG. 2 A

EP 0 401 126 B1

FIG. 2 B

FIG. 3